# EUROPEAN PATENT APPLICATION

(11) **EP 4 650 629 A1**
(43) Date of publication of application: **19.11.2025**
(21) Application number: 24020143.4
(22) Date of filing: 12.05.2024
(51) Int. Cl.: F16K 1/22, F16K 27/02, F16K 31/163

(54) **HYDRAULIC ACTUATOR**

(71) Applicant: Canjuga, Kresimir, 42240 Ivanec (HR)
(72) Inventor: Canjuga, Slavko, 42240 Ivanec (HR)
(74) Representative: Sucic, Tatjana

(57) **Abstract**

The present invention relates to a weight loaded hydraulic actuator for a valve (21) operation, comprising an actuator housing (1), hydraulic cylinder (2) connected to the actuator housing (1) with center trunnion attachments (14) and connected to the actuator arm (3), a hollow shaft (4) coupled to the actuator arm (3), a weight (8) with a lever (7) connected to the actuator arm (3) for providing additional force for valve closing, an auxiliary flange with bearing (6) for accommodating the hollow shaft (4) and assembly (10), an electro-cabinet with local control panel (20) and a compact electro-hydraulic power unit (19) attached to the actuator housing (1). The actuator housing (1) is configured to enable an access to an interior of the actuator housing 1 during servicing work. The hollow shaft (4) is coupled to a valve shaft (15) by one or more keys to enable transmitting only of a torque and preventing the valve shaft (15) from bending and additional load on the valve bearings. With such a design, in addition to a better function, a lifetime of the valve (21) itself is also increased.

## Description

### Technical field

The present invention relates to a hydraulic actuator, in particular to a weight loaded hydraulic actuator suitable for quarter-turn valves such as butterfly, ball, and axial plunger valves. A design of the hydraulic actuator allows flexible mounting on both sides of the valve, and its design accommodates various configurations, including solely hydraulic operation, or hydraulic operation supported with a weight arranged on a lever.

### Background of the Invention

Prior art suggests many different solutions of hydraulic actuators with weights. The main drawback of these solutions is the flawed mechanical concept of the actuator, which ultimately results in numerous disadvantages.

A lack of universality of the existing solutions is a consequence of the fact that the actuators are designed most often by valve manufacturers themselves or by companies for which the design of actuators and valve automation is not their core activity. As a result, the design of the actuator is most often adapted to specific requests of the user in terms of function, type and size of the valve. It is clear that in this case the actuators do not have the necessary universality both in terms of standard sizes with respect to torques and in application for different types of quarter-turn valves (butterfly, ball and control) from different manufacturers, of different sizes and functions.

Basic disadvantages of existing patented solutions are the following. The most common versions of the actuator housing are with two side panels (front and back), which is necessary due to the mounting of the lever for accepting weights. The plates are connected to each other with screws, which results in reduced mechanical strength and rigidity of the complete actuator housing and greater weight due to the need for greater thickness of these plates. In other words, the actuator is mounted on a valve in parts, not as a whole. This means that first base plate of the actuator is mounted on the valve, then the lever carrying the weight is placed directly on a valve shaft and finally a valve housing is closed with another side plate.

This is a major drawback of the majority of known solutions, which do not have their own adequate housing, but are mounted directly on a valve shaft so that all forces during the operation of the actuator are transmitted directly to the valve shaft and bearings. As a result, the valve shaft, in addition to an operational torsional moment, is additionally loaded to bending, which results in the valve shaft and associated valve bearings being additionally highly loaded, which significantly reduces a lifetime of the valve, and in addition, the dynamics of the valve operation in cases of rapid opening and /or closures.

Due to the fact that in most existing solutions, the front plate of the actuator is mounted after mounting the weight lever, the actuator as a whole without a valve cannot be fully functionally equipped and tested at the factory, which means that much more work is needed when mounting the valve on site and some practical problems may arise.

Existing actuators on their housing do not have easily accessible adjustable mechanical stops for an open and closed position of the valve, which is very important for different types of quarter turn valves from different manufacturers.

Some solutions do not include a safety pin at all, and some have a safety pin only for an open valve position, i.e. for the case when a weight is in a raised position, i.e. safety blocking of the actuator position, i.e. the valve when performing service work on the actuator or valve.

Since front and rear panels do not have corresponding cutouts, visual control and access to a connecting point of a hydraulic cylinder piston rod and a weight lever during assembly is limited.

The construction of an actuator is not typical and standardized, it is difficult or impossible to apply it for shut-off and/or safety and/or regulation functions on different types of quarter-turn valves (butterfly, ball, regulation), especially from different manufacturers.

Some of the existing actuator solutions have a long lever placed directly on a valve shaft, which due to its length is not practical for using an actuator without weights, for example in cases of limited installation space when the valve is driven in the opening and closing direction by pure hydraulic oil under pressure.

Insufficient universality of existing solutions results in more complex assembly of valves, actuators and adjustment of a system at the point of use, especially for large valves and actuators. Existing actuators can only be used with valves with a horizontal position of the shaft, they cannot be used with valves with a vertical shaft, such as, for example, the most common types of ball valves.

Existing concepts are more difficult to solve the factory installation of various electrical equipment such as microswitches of different types and sizes, sensors and transmitters of the open position, electrical cabinets and similar equipment for "plug and play" installation later at the location of valve use.

Finally, the existing technical solutions are not suitable for production in larger series.

### Summary of the Invention

The present invention relates to a weight loaded hydraulic actuator for a valve operation, comprising an actuator housing, hydraulic cylinder connected to the actuator housing with center trunnion attachments and connected to the actuator arm, a hollow shaft coupled to the actuator arm, a weight with a lever connected to the actuator arm for providing additional force for valve closing, an auxiliary flange with bearing for accommodating the hollow shaft and assembly, an electro-cabinet with local control panel and a compact electro-hydraulic power unit attached to the actuator housing. The hydraulic actuator further comprising an attachment flange with bearing coupled to the hollow shaft and fixedly connected to a flange, the flange is attached to a valve body through which a valve shaft is passing, where the hollow shaft is coupled with the valve shaft enabling a transmission of a torque to open or close the valve.

The actuator housing is consisting of mutually parallelly spaced sidewalls, a first and second sidewall, and lateral walls, the mutually spaced sidewalls and lateral walls are being mutually welded.

According to one embodiment of the invention, the parallelly spaced sidewalls and lateral walls of the actuator housing include cutouts and an upper side of the actuator housing is opened, said cutouts and an upper open side are configured to enable assembly of the hydraulic cylinder with center trunnion attachments and the actuator arm, and access to an interior of the actuator housing during servicing work.

According to the further embodiment of the present invention, the parallelly spaced sidewalls of the actuator housing include a first opening arranged above an opening and a second opening arranged near a bottom of the actuator housing, the first and second opening are configured to receive a service pin.

Large cutouts on the sides of the actuator housing allow a better view when mounting and tightening the actuator on an attachment flange with bearing, as well as good access when adjusting the attachment of a hydraulic cylinder piston rod to an actuator arm, what is particularly important for large actuators and valves.

A hydraulic actuator design allows for convenient mounting on either the left or right side of a valve, enhancing versatility in installation configurations. An actuator arm, mounted on a hollow shaft within an actuator housing, enables simple and reliable attachment of the lever for connecting weights for additional torque as needed.

A hydraulic actuator of the present invention offers flexibility in operation, capable of functioning with or without a lever and weights. In condition with a limited space for arranging a lever and weights, the hydraulic actuator operates solely through hydraulic pressure from the hydraulic cylinder supplied by a compact electro-hydraulic power unit, with safety functions potentially supported by a hydraulic accumulator.

Moreover, when a valve shaft is arranged horizontally, a hydraulic actuator with weights can be utilized in all hydraulic cylinder positions (horizontal or vertical). Even when the valve shaft is vertical, the hydraulic actuator remains functional, relying on hydraulic pressure for torque without the need for weights.

According to the further embodiment of the present invention, adjustable mechanical limiters integrated into an actuator housing enable precise mechanical limitation of the valve's open and closed positions, enhancing operational control and safety.

For service purposes, the hydraulic actuator features a service pin for securely blocking the actuator's position during maintenance work on the actuator or valve, ensuring safety and ease of service.

Furthermore, the actuator housing design allows straightforward attachment of the control cabinet and a compact electro-hydraulic power unit, which may include a hand pump for emergency operation during power outages.

An attachment flange with a built-in bearing, compliant with ISO 5211 standards, ensures efficient transmission of torque for a valve operation, thereby increasing valve lifespan by reducing a valve shaft bending and additional bearing load.

An auxiliary flange accommodates the opposite side of the hollow shaft and supports a sensor assembly containing visual indicators of valve opening, electric limit switches, and, when required, a rotary encoder for valve position.

The design concept of a hydraulic actuator of the present invention enables cost-effective mass production of actuator components, factory testing, and quick assembly onto quarter-turn valves from various manufacturers, utilizing a "plug and play" system for seamless integration.

### Brief Description of Drawings

The following detailed description of certain techniques of the present application, will be better understood when read in conjunction with the appended drawings where:

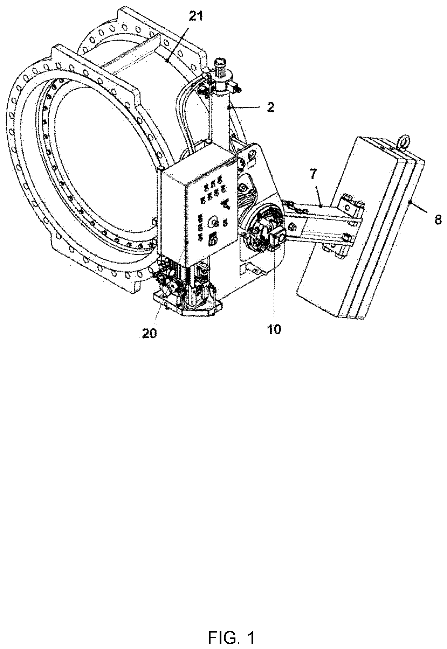

Figure 1 illustrates a perspective view of a valve with assembled a weight loaded hydraulic actuator of the present invention,

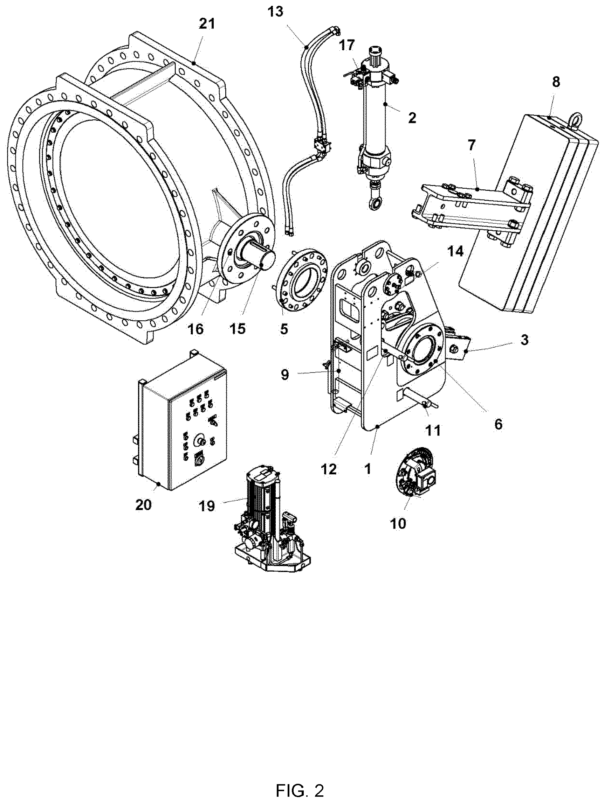

Figure 2 illustrates an exploded view of a valve with assembled a weight loaded hydraulic actuator shown in Fig. 1,

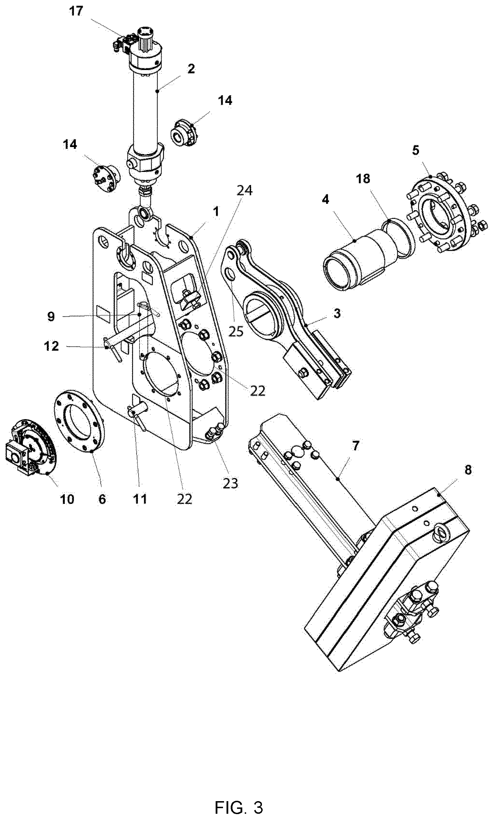

Figure 3 illustrates an exploded view of a weight loaded hydraulic actuator according to the embodiment of the present invention, and

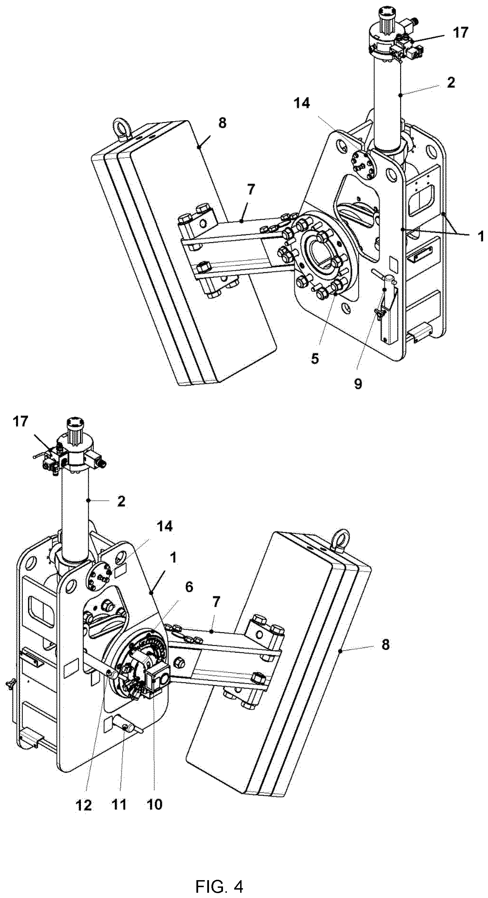

Figure 4 illustrates a perspective view from a left-side and right-side of a weight loaded hydraulic actuator.

### Detailed Description of the Invention

The present invention relates to a weight loaded hydraulic actuator designed for valves 21 such as butterfly, ball, control and axial plunger valves. Main components of the hydraulic actuator include an actuator housing 1, hydraulic cylinder 2, actuator arm 3, weight 8 with a lever 7, compact electro-hydraulic power unit 19, and electro cabinet with control panel 20. The electro-hydraulic power unit 19, and electro cabinet with control panel 20 are attached to an outer side of the actuator housing 1. The actuator housing 1 is constituted of mutually parallelly spaced sidewalls, i.e. a first and second sidewall, and lateral walls. The mutually spaced sidewalls and lateral walls are being mutually entirely welded to ensure optimal stiffness and strength of the actuato22r housing 1. The parallelly spaced sidewalls and lateral walls of the actuator housing 1 include cutouts and an upper side of the actuator housing 1 is opened, said cutouts and an upper open side enable easy assembly and integration of essential components of the hydraulic actuator, including the hydraulic cylinder 2 with center trunnion attachments 14, the actuator arm 3, a hollow shaft 4, flanges with bearings 5, 6, and other components necessary for transmitting torques essential for reliable valve operation, and also for performing service work on the hydraulic actuator or the valve 21.

The actuator arm 3 is partially arranged inside the actuator housing 1, wherein a first end of the actuator arm 3 is configured to be connected to a piston rod of the hydraulic cylinder 2, said first end is arranged inside the actuator housing 1, and a second end of the actuator arm 3 is configured to be fixedly connected with a first end of the lever 7, the second end of the actuator arm 3 extending outside the actuator housing 1, where a second end of the lever 7 is fixedly connected with the weight 8, the weight 8 provides additional force for rapid and safety valve closing. The actuator arm 3 comprises an inner aperture which is sized to receive the hollow shaft 4, and a hole 25 arranged below a connection of the actuator arm 3 with the piston rod of the hydraulic cylinder 2, the hole 25 is configured to receive the service pin 9 for safety blocking a position of the hydraulic actuator and valve 21 during the service work. The inner aperture of the actuator arm 3 includes one or more first key slots and the hollow shaft 4 on its outer surface comprises one or more respective second key slots, where the hollow shaft 4 enters inside the inner aperture of the actuator arm 3 wherein, the actuator arm 3 and the hollow shaft 4 are coupled with each other by one or more respective first keys thus enabling transmitting of a torque. Further, the actuator housing 1 on its parallelly spaced sidewalls include parallelly arranged circular openings 22, where the actuator arm 3 is arranged inside the actuator housing 1 to enable passing of the hollow shaft 4 through the circular openings 22 of the actuator housing 1 and concurrently trough the circular opening of the actuator arm 3. One side of the hollow shaft 4 is connected to a flange with bearing 6 and an assembly 10. The flange with bearing 6 is configured to accommodate a first end of the hollow shaft 4 and provides connecting of the assembly 10. The assembly 10 comprises cams with pointer, limit switches with scale, and sensors assembly. The flange with bearing 6 is fixedly connected to a first outer sidewall of the actuator housing 1. A second end of the hollow shaft 4 is embedded in an attachment flange with bearing 5, one side of the attachment flange with bearing 5 is fixedly attached to the second outer sidewall of the actuator housing 1. The other side of the attachment flange with bearing 5 is fixedly connected to a flange 16, the flange 16 is attached to a valve body through which a valve shaft 15 passes, where the hollow shaft 4 is coupled with the valve shaft 15 enabling a transmission of a torque to open or close the valve 21. Inside the opposite end of the hollow shaft 4 are arranged third key slots matching fourth key slots arranged on the valve shaft 15 enabling connection of the hollow shaft 4 and the valve shaft 15 by second keys or like elements. Such connection enables a transmission of the necessary torque to open or close the valve 21. An inner circumference of the hollow shaft 4 may be adapted to an outer circumference of the valve shaft 15, thus making the hydraulic actuator easily adaptable to different designs of the quarter turn valve shafts.

The aforementioned flange with bearing 5 has a built-in bearing in which the hollow shaft 4 rotates, and in this way only the torque required for reliable valve operation is transmitted to the valve shaft 15, and it prevents the valve shaft from bending and additional load on the valve bearings. With such a design, in addition to a better function, a lifetime of the valve itself is also increased.

The actuator housing 1 on its parallelly arranged sidewalls comprise a first and second opening configured for receiving a service pin 9. The first opening is arranged above the circular openings 22 and the second opening arranged near a bottom of the actuator housing 1. A function of the service pin 9 is to enable safety blocking of a position of the hydraulic actuator, i.e. the valve 21 when performing service work on the hydraulic actuator or valve 21 in the open or closed position. As illustrated in figure cc, a reference number 12 shows position of the service pin 9 being inserted in the first opening of the sidewalls of the actuator housing 1 and also passing through a hole 25 of the actuator arm 3, the hole 25 is arranged below connection of the actuator arm 3 with the hydraulic cylinder 2, providing blocking of the actuator i.e. valve 21 in the closed position. A reference number 11 shows position of the service pin 9 being inserted in the second opening of the said side plates of the actuator housing 1, the second opening is arranged near a bottom of the actuator housing 1, and also when passing through the hole 25 of the actuator arm 3 providing blocking of the actuator i.e. valve 21 in the open position.

The actuator housing 1 further comprises a mechanical limiter 24 of the valve 21 opened position attached to an upper part of a lateral wall of the actuator housing 1, and a mechanical limiter 23 of the valve 21 closed position attached to a lower part of the lateral wall of the actuator housing 1. The mechanical limiters 24 and 23 limit a stroke of the lever 7.

A design of the actuator housing 1 enables simplified installation of the hydraulic cylinder 2 using the center trunnion attachment 14, optionally equipped with a hydraulic control valve 17 for added functionality.

Also, the actuator housing 1 enables the attachment of the local control panel 20 and a compact electro-hydraulic power unit 19 which can be with or without a hydraulic hand pump for forced operation in case of power failure.

According to the present invention, a weight loaded hydraulic actuator may be used with the valve 21 having a horizontally arranged valve shaft 15 where the hydraulic cylinder 2 may be arranged either horizontally or vertically.

In a vertical position of the valve shaft 15, the hydraulic actuator can also be used. In this case, the weight 8 and the lever 7 are removed, but the torque is achieved by the direct action of hydraulic oil under a pressure. The actuator operates solely through hydraulic pressure from the hydraulic cylinder 2 supplied by the compact electro-hydraulic power unit 19 supported by a hydraulic accumulator.

When the valve 21 having a horizontally arranged valve shaft 15, the hydraulic cylinder 2 is arranged either horizontally or vertically.

In a vertical position of the valve shaft 15, the weight 8 and lever 7 are removed the actuator operates solely through hydraulic pressure from the hydraulic cylinder 2 supplied by the compact electro-hydraulic power unit 19 supported by a hydraulic accumulator.

Large cutouts on the sides of the actuator housing 1 allow a better visibility when mounting and tightening the actuator on the attachment flange with bearing 5, as well as good access when adjusting the attachment of the hydraulic cylinder piston rod to the actuator arm 3, and what is particularly important for large actuators and valves.

The modularity of the actuator design allows for convenient mounting on either the left or right side of the valve 21, enhancing versatility in installation configurations. The actuator arm 3, mounted on the hollow shaft 4 within the actuator housing 1, enables simple and reliable attachment of the lever 7 for accommodating weights 8 for additional torque as needed.

The actuator offers flexibility in operation, capable of functioning with or without the lever 7 and weighs 8. In condition with a limited space for the lever 7 and weighs 8, the hydraulic actuator operates solely through hydraulic pressure from the hydraulic cylinder 2 supplied by the electro-hydraulic power unit 19, with safety functions potentially supported by a hydraulic accumulator.

Moreover, when the valve shaft 15 is arranged horizontal, the hydraulic actuator with weights 8 can be utilized in all hydraulic cylinder positions (horizontal or vertical). Even when the valve shaft 15 is vertical, the actuator remains functional, relying on hydraulic pressure for torque without the need for the weights 8.

Adjustable mechanical limiters 23 and 24 integrated into the actuator housing 1 enable precise mechanical limitation of the valve's open and closed positions, enhancing operational control and safety.

For service purposes, the actuator features a service pin 9 for securely blocking the actuator's position during maintenance work on the hydraulic actuator or valve 21, ensuring safety and ease of service.

The hollow shaft 4 incorporates one or more third key slots matching one or more fourth key slots arranged on the valve shaft 15 enabling connection of the hollow shaft 4 and the valve shaft 15 by respective one or more second keys to enable transmitting of a torque, facilitating easy adaptation to various quarter-turn valve shaft configurations.

Furthermore, the actuator housing design allows straightforward attachment of the electro-cabinet with local control panel 20 and the electro-hydraulic power unit 19, which may include a hand pump for emergency operation during power outages.

The attachment flange 5 with a built-in bearing, compliant with ISO 5211 standards, ensures efficient transmission of torque for valve operation, thereby increasing valve lifespan by reducing shaft bending and additional bearing load.

The auxiliary flange with bearing 6 accommodates the opposite side of the hollow shaft 4 and supports a sensor assembly 10 containing visual indicators of valve opening, electric limit switches, and, when required, a rotary encoder for valve position.

The design concept enables cost-effective mass production of actuator components, factory testing, and quick assembly onto quarter-turn valves from various manufacturers, utilizing a "plug and play" system for seamless integration.

## Claims

1. A weight loaded hydraulic actuator for a valve (21) operation, comprising an actuator housing (1), hydraulic cylinder (2) connected to the actuator housing (1) with center trunnion attachments (14) and connected to the actuator arm (3), a hollow shaft (4) coupled to the actuator arm (3), a weight (8) with a lever (7) connected to the actuator arm (3) for providing additional force for valve closing, an auxiliary flange with bearing (6) for accommodating a first end of the hollow shaft (4) and assembly (10), an electro-cabinet with local control panel (20) and an electro-hydraulic power unit (19) attached to an outer side of the actuator housing (1), **characterized by** that the hydraulic actuator further comprising:
- an attachment flange with bearing (5) coupled to a second end of the hollow shaft (4) and fixedly connected to a flange (16), the flange (16) is attached to a valve body through which a valve shaft (15) is passing, where the hollow shaft (4) is coupled with the valve shaft (15) enabling a transmission of a torque to open or close the valve (21),
- wherein the actuator housing (1) is consisting of mutually parallelly spaced sidewalls, a first and second sidewall, and lateral walls, the mutually spaced sidewalls and lateral walls are being mutually welded, the parallelly spaced sidewalls include parallelly arranged circular openings (22) configured to enable passing of the hollow shaft (4) through the circular openings (22) and for attaching the auxiliary flange with bearing (6) and the attachment flange with bearing (5),
- wherein the parallelly spaced sidewalls and lateral walls of the actuator housing (1) include cutouts and an upper side of the actuator housing (1) is opened, said cutouts and an upper open side are configured to enable assembly of the hydraulic cylinder (2) with center trunnion attachments (14) and the actuator arm (3), and access to an interior of the actuator housing (1) during servicing work, and
- wherein the parallelly spaced sidewalls of the actuator housing (1) include a first opening arranged above the circular openings (22) and a second opening arranged near a bottom of the actuator housing (1), the first and second opening are configured to receive a service pin (9).

2. The hydraulic actuator according to claim 1, wherein the actuator housing (1) further comprises a mechanical limiter (24) of the valve (21) opened position attached to an upper part of a lateral wall of the actuator housing (1), and a mechanical limiter (23) of the valve (21) closed position attached to a lower part of the lateral wall of the actuator housing (1), the mechanical limiters (23, 24) are configured to limit the stroke of the lever (7).

3. The hydraulic actuator according to claim 1, wherein the actuator arm (3) comprises an inner aperture which is sized to receive the hollow shaft (4), and a hole (25) arranged below a connection of the actuator arm (3) with the piston rod of the hydraulic cylinder (2), the hole (25) is configured to receive the service pin (9) for safety blocking a position of the hydraulic actuator and valve (21) during the service work.

4. The hydraulic actuator according to claim 3, wherein the inner aperture of the actuator arm (3) includes one or more first key slots and the hollow shaft (4) on its outer surface comprises one or more respective second key slots, where the hollow shaft (4) enters inside the inner aperture of the actuator arm (3), wherein the actuator arm (3) and the hollow shaft (4) are coupled with each other by one or more respective first keys thus enabling transmitting of a torque.

5. The hydraulic actuator according to claim 1, wherein a first end of the actuator arm (3) is configured to be connected to a piston rod of the hydraulic cylinder (2), said first end is arranged inside the actuator housing (1), and a second end of the actuator arm (3) is extending outside the actuator housing (1) and configured to be fixedly connected with a first end of the lever (7).

6. The hydraulic actuator according to claim 1, wherein inside the hollow shaft (4) are arranged one or more third key slots matching one or more fourth key slots arranged on an outer surface of the valve shaft (15) enabling connection of the hollow shaft (4) and the valve shaft (15) by respective one or more second keys to enable transmitting of a torque.

7. The hydraulic actuator according to claim 1, wherein an inner circumference of the hollow shaft (4) is adapted to an outer circumference of the valve shaft (15).

8. The hydraulic actuator according to claim 1, wherein when the valve (21) having a horizontally arranged valve shaft (15), the hydraulic cylinder (2) is arranged either horizontally or vertically.

9. The hydraulic actuator according to claim 1, wherein in a vertical position of the valve shaft (15), the weight (8) and lever (7) are removed and the hydraulic actuator operates solely by a hydraulic pressure from the hydraulic cylinder (2) supplied by the compact electro-hydraulic power unit (19) through a hose (13).
